# DEMANDE DE BREVET EUROPEEN

(11) **EP 1 594 065 A1**
(43) Date de publication de la demande: **09.11.2005**
(21) Numéro de dépôt: 05290957.9
(22) Date de dépôt: 02.05.2005
(51) Int. Cl.: G06F 13/362, G06F 13/16

(54) **Système sur une puce avec unité d'arbitrage, et clé de stockage l'incorporant**

(30) Priorité: 03.05.2004 FR 0404703
(71) Demandeur: STMicroelectronics S.A., 92120 Montrouge (FR)
(72) Inventeur: Chalopin, Hervé, 13400 Aubagne (FR); Tabaries, Laurent, 13400 Aubagne (FR)
(74) Mandataire: Loisel, Bertrand

(57) **Abrégé**

Un système électronique comprend un nombre déterminé N de modules fonctionnels (21-23), dont un nombre déterminé P de modules initiateurs (21-22) et un nombre déterminé Q de modules cibles (23) où N, P et Q sont des nombres entiers tels que 2 ≤ P ≤ N et 1 ≤ Q ≤ N. En cas d'une pluralité de requêtes conflictuelles d'accès à une ressource commune (23) provenant d'une pluralité de modules initiateurs respectifs (21-23), une unité d'arbitrage (24) accorde un droit exclusif d'accès à la ressource à l'un déterminé de ces modules initiateurs. L'unité d'arbitrage est construite pour, soit appliquer un mécanisme d'arbitrage standard à ces initiateurs respectifs, soit appliquer prioritairement un mécanisme d'arbitrage spécifique seulement aux membres d'un sous-ensemble de ces modules initiateurs, pour chacun desquels elle reçoit un signal d'accès privilégié (GUARD) associé.

Application à une clé de mémoire.

## Description

La présente invention se rapporte de manière générale au domaine des systèmes électroniques numériques en circuit intégré, appelés "systèmes sur une puce" ou SoC (de l'anglais "System On a Chip").

Plus particulièrement, l'invention concerne les mécanismes d'arbitrage pour gérer des requêtes d'accès conflictuelles initiées par des modules fonctionnels distincts dans un tel système.

Dans un système électronique numérique, des ressources sont classiquement partagées entre des modules fonctionnels qui y ont accès. Un tel module fonctionnel est parfois appelé composant virtuel ou bloc de "propriété intellectuelle", ou encore bloc IP (de l'anglais "Intellectual Property") dans le jargon de l'homme du métier. Il est conçu pour assurer une fonction déterminée, ou est à usage général (il s'agit éventuellement d'un microprocesseur ou d'un microcontrôleur). Il peut être réalisé sous la forme d'éléments matériels et/ou d'éléments logiciels.

On distingue les modules de type maître (ci-après modules initiateurs), qui prennent l'initiative d'échanger des données avec un ou plusieurs autres modules et les modules de type esclave (ci-après modules cibles), dont le rôle est de répondre aux requêtes reçues du module initiateur qui a la main. En cas de pluralité de modules initiateurs, une unité d'arbitrage (ou arbitre) est chargée d'arbitrer des requêtes conflictuelles d'accès à une ressource commune provenant de modules initiateurs distincts, pour accorder un droit d'accès exclusif à la ressource, à l'un déterminé desdits modules initiateurs.

Dans l'état de la technique, on connaît divers mécanismes d'arbitrage susceptibles d'être mis en oeuvre dans une unité d'arbitrage. Par exemple, un algorithme par permutation circulaire ("Round Robin" en anglais), permet d'attribuer le droit d'accès séquentiellement aux modules initiateurs demandeurs, chacun à leur tour. En variante un algorithme par ancienneté, dit LRU ("Least Recently Used"), attribue le droit d'accès au module initiateur qui le demande et qui est le plus ancien à l'avoir eu. D'autres algorithmes sont basés sur des droits de priorité fixes, respectivement associés aux modules initiateurs.

Dans certaines architectures, il est souhaitable de prévoir des exceptions à l'application d'un mécanisme d'arbitrage standard en cas de requêtes conflictuelles, afin de réserver dynamiquement un droit d'accès privilégié, à l'un déterminé des modules initiateurs. Il peut aussi être souhaitable de pouvoir dynamiquement réserver un droit d'accès privilégié, à l'un déterminé parmi un groupe restreint de modules initiateurs en cas de requêtes conflictuelles d'accès à une même ressource, selon un mécanisme d'arbitrage spécifique s'appliquant prioritairement aux modules initiateurs de ce groupe. Par "prioritairement", il faut comprendre que le mécanisme d'arbitrage spécifique s'applique, en remplacement du mécanisme d'arbitrage standard, aux seuls modules initiateurs dudit groupe.

On peut bien sûr penser à utiliser un algorithme à priorités configurables. Un tel algorithme, mis en oeuvre au niveau logiciel, est néanmoins très complexe et donc à exécution trop lente pour certaines applications.

C'est pourquoi un premier aspect de l'invention propose un système électronique comprenant un nombre déterminé N de modules fonctionnels, dont un nombre déterminé P de modules initiateurs et un nombre déterminé Q de modules cibles où N, P et Q sont des nombres entiers tels que 2 ≤ P ≤ N et 1 ≤ Q ≤ N, et comprenant en outre une unité d'arbitrage pour, en cas d'une pluralité de requêtes conflictuelles d'accès à une ressource commune provenant d'une pluralité de modules initiateurs respectifs, accorder un droit exclusif d'accès à la ressource à l'un déterminé parmi ladite pluralité de modules initiateurs respectifs. Avantageusement, l'unité d'arbitrage est construite pour accorder le droit exclusif d'accès soit via un mécanisme d'arbitrage standard appliqué à ladite pluralité de modules initiateurs respectifs, soit prioritairement via un mécanisme d'arbitrage spécifique appliqué seulement aux membres d'un sous-ensemble de ladite pluralité des modules initiateurs, pour chacun desquels l'unité d'arbitrage reçoit un signal d'accès privilégié associé audit module initiateur d'une part et audit mécanisme d'arbitrage spécifique d'autre part.

Une telle solution peut être mise en oeuvre au niveau matériel. Elle offre donc la possibilité d'une gestion de l'arbitrage plus souple et plus rapide.

Dans certaines applications, les modules initiateurs sont reliés aux modules cibles par l'intermédiaire de l'unité d'arbitrage, celle-ci formant également un module de commande pour l'échange d'informations entre lesdits modules initiateurs et lesdits modules cibles. La ressource commune est alors l'un desdits modules cibles.

Dans d'autres applications, les modules fonctionnels et l'unité d'arbitrage sont reliés ensemble par un bus de communication. La ressource commune précitée est alors ledit bus de communication, utilisé pour l'échange d'informations entre lesdits modules initiateurs et lesdits modules cibles.

Le nombre de mécanismes d'arbitrage spécifiques n'est pas limité à l'unité. Au contraire, l'unité d'arbitrage peut être construite, en outre, pour sélectionner le mécanisme d'arbitrage spécifique à appliquer, en tant que mécanisme d'arbitrage de plus haut niveau parmi une hiérarchie de mécanismes d'arbitrage spécifiques, qui sont chacun applicable seulement aux membres d'un sous-ensemble respectif de la pluralité de modules initiateurs pour chacun desquels l'unité d'arbitrage reçoit un signal d'accès privilégié associé audit module initiateur et audit mécanisme d'arbitrage spécifique et en outre des signaux d'accès privilégié associés audit module initiateur d'une part et respectivement à chacun des mécanismes d'arbitrage spécifiques de niveau inférieur d'autre part.

Dans un exemple de réalisation, un signal d'accès privilégié associé à un module initiateur déterminé est généré par lecture de la valeur stockée dans un registre de données associé audit module initiateur. Ceci permet une gestion dynamique de l'arbitrage, par simple écriture dans un registre.

Par exemple, le registre de données associé à un module initiateur déterminé peut être accessible en écriture par ledit module initiateur lui-même. Avantageusement, il peut s'agir d'un registre compris dans l'unité d'arbitrage.

En variante, ou en complément, un signal d'accès privilégié associé audit module initiateur, respectivement à un autre module initiateur déterminé, est un signal reçu de l'extérieur.

Dans un mode de réalisation, l'unité d'arbitrage est implémentée sous la forme d'une machine d'états.

Un second aspect de l'invention propose une clé de stockage comprenant au moins une mémoire non volatile et un circuit de commande, caractérisée en ce que le circuit de commande est un circuit sur une puce formant un système selon le premier aspect ci-dessus.

D'autres caractéristiques et avantages de l'invention apparaîtront encore à la lecture de la description qui va suivre. Celle-ci est purement illustrative et doit être lue en regard des dessins annexés sur lesquels:
- la figure 1 est un schéma synoptique d'un exemple de clé de mémoire selon le second aspect de l'invention;
- la figure 2 est un schéma synoptique d'un exemple de système électronique selon le premier aspect de l'invention, qui peut être compris dans la clé de mémoire de la figure 1;
- la figure 3 est un diagramme d'états illustrant le fonctionnement d'une unité d'arbitrage qui peut être comprise dans le système de la figure 2;
- la figure 4 est un schéma synoptique d'un autre exemple de système électronique selon le premier aspect de l'invention; et,
- la figure 5 est un schéma illustrant le couplage d'un module fonctionnel à un bus de communication dans un système selon la figure 4.

L'invention est décrite ci-après dans un exemple d'application à un circuit de commande destiné à gérer une clé de stockage ou clé de mémoire.

Une clé de mémoire forme un medium de stockage de masse de petites dimensions, monté dans un support amovible prenant la forme d'une clé ou d'un porte-clés. Ce medium permet de stocker et de transporter facilement une certaine quantité de données, dans le but, par exemple, de les transférer d'un ordinateur à un autre. Une telle clé de mémoire s'insère en principe dans les ports USB ("Universal Serial Bus") des ordinateurs. C'est pourquoi on l'appelle aussi clé de stockage USB, clé de mémoire USB ou tout simplement clé USB.

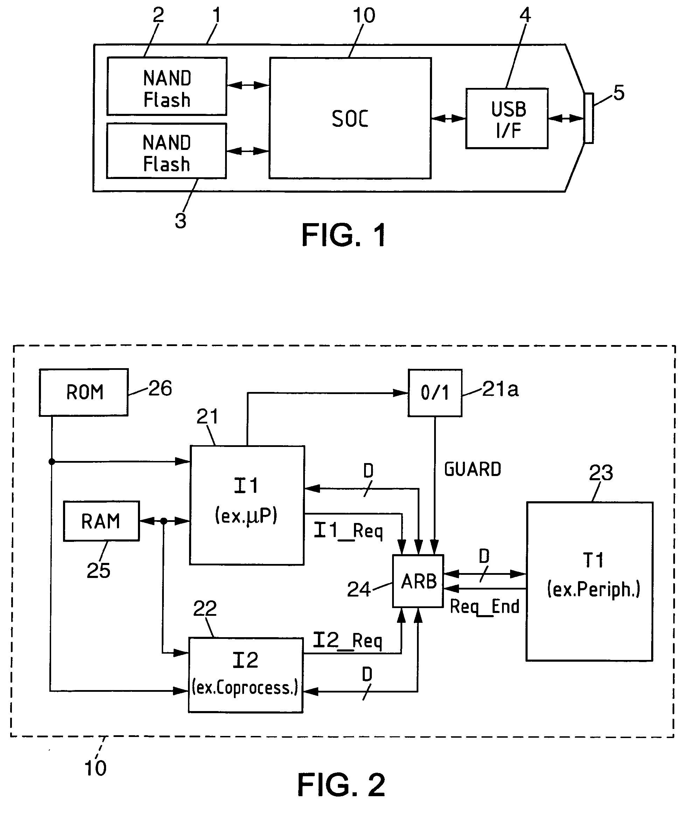

A la figure 1, une telle clé de mémoire 1 comprend un circuit de commande 10, couplé à un connecteur 5 de type USB, via un circuit 4 d'interface USB. Par ailleurs, le circuit 10 est couplé à une ou plusieurs mémoires 2,3 non volatiles et de grande capacité, qui sont par exemple des mémoires de type NAND-Flash ou similaire. Le circuit 10 est télé-alimenté lorsque la clé de mémoire 1 est connectée via le connecteur 5 à un ordinateur (non représenté) ou similaire. Le circuit d'interface 4 peut par exemple assurer la compatibilité avec la norme USB 2.0 (norme pour l'échange de données entre les ordinateurs à image général et leurs périphériques).

Le circuit de commande peut avantageusement être un système sur une puce (SoC), afin de satisfaire un haut degré d'intégration requis par la miniaturisation souhaitée de ce genre de produits électroniques.

La figure 2 illustre un exemple d'architecture d'un tel système.

Dans cet exemple, le système 10 comprend deux coeurs 21 et 22, qui sont par exemple respectivement un microcontrôleur tel que le ST7 de STMicroelectronics, et un coprocesseur dédié aux opérations de commande des moyens de stockage de masse formés par les mémoires internes 2 et 3.

Ces coeurs 21 et 22 sont conçus en tant que modules fonctionnels de type initiateur (respectivement I1 et I2). Pour leur communication entre eux et avec d'autres modules fonctionnels, ils respectent par exemple les spécifications du standard VCI ("Virtual Component Interface") de la VSIA ("Virtual Socket Interface Alliance"), Wakefield, Massachusetts, Etats-Unis. A cet effet, certains modules peuvent avoir besoin d'une interface VCI, comme c'est le cas du microcontrôleur ST7 bien que cette interface ne soit pas représentée à la figure, car en tant que tel ils ne supportent pas ce standard.

Une mémoire volatile (RAM - "Random Access Memory") 25, est utilisée par les modules 21 et 22 pour stocker des informations temporaires, liées à l'application concernée. De plus, une mémoire non volatile (ROM - "Read Only Memory") 26 stocke des données permanentes, notamment le code de l'application qui est chargé dans les modules 21 et/ou 22 à la mise sous tension.

Le système 10 comprend aussi un contrôleur de périphérique 23, en particulier un contrôleur de fonction USB 2.0, tel que le composant virtuel MUSBHSFC Inventra™ de Mentor Graphics, en tant que module fonctionnel de type cible (T1). Ce composant virtuel est compatible avec le standard VCI précité.

A la fois le microcontrôleur 21 et le coprocesseur 22 peuvent avoir accès, sur requête, au contrôleur de périphérique 23. Des données (D) peuvent être échangées entre les modules initiateurs 21 et 22 d'une part, et le module cible 23 d'autre part, via l'unité d'arbitrage 24 formant module de commande pour un tel échange de données. Dit autrement, le contrôleur 23 est une ressource commune aux deux coeurs 21 et 22.

C'est pourquoi le système 10 comprend encore une unité d'arbitrage 24 (ARB). En cas de requêtes conflictuelles d'accès au module cible 23 provenant respectivement des modules initiateurs 21 et 22, l'unité 24 accorde un droit exclusif d'accès à la ressource à l'un seulement d'entre eux, en appliquant un mécanisme d'arbitrage déterminé. A la figure 2, on note ainsi I1_Req et I2_Req, des signaux de requête d'accès délivrés à l'unité d'arbitrage 24 respectivement par le module initiateur 21 et par le module initiateur 22. Ces signaux sont activés (c'est-à-dire positionnés à leur état actif, par exemple l'état logique 1), lorsque le module initiateur correspondant a besoin d'accéder au module cible 23. Il y a conflit lorsque les signaux I1_Req et I2_Req sont actif simultanément. L'unité d'arbitrage 24 doit arbitrer ce conflit.

A cet effet, l'unité d'arbitrage est construite pour accorder un droit exclusif d'accès au module cible 23, soit via un mécanisme d'arbitrage standard appliqué aux modules initiateurs 21 et 22, soit prioritairement au module initiateur 21 lorsqu'elle reçoit un signal d'accès privilégié (correctement positionné à son état actif, par exemple l'état logique 1) associé audit module initiateur 21. Le mécanisme d'arbitrage standard peut être de n'importe quel type connu, par exemple à algorithme par permutation circulaire, à algorithme d'ancienneté ou à priorités fixes.

Dit autrement, le signal d'accès privilégié GUARD assure au module initiateur 21, de façon dynamique, un accès prioritaire au module cible 23 lorsqu'il est actif (GUARD=1). Par accès prioritaire, il faut comprendre que l'accès est accordé indépendamment du mécanisme d'arbitrage standard, lequel ne s'applique que lorsque le signal GUARD est inactif (GUARD=0). Cette solution repose sur une mise en oeuvre au niveau matériel, et non au niveau logiciel. Elle permet donc une gestion plus rapide des mécanismes d'arbitrage.

Dans un exemple de réalisation, le signal d'accès privilégié GUARD associé au module initiateur 21 est généré par lecture d'une valeur stockée dans un registre de données 21 a associé audit module initiateur 21. Ce registre 21 a peut avantageusement être compris dans l'unité d'arbitrage 24. De préférence, le registre 21 a est accessible en écriture par le module initiateur 21 auquel il est associé. Cela permet à l'application s'exécutant dans le module initiateur de se réserver un privilège d'accès en fonction de ses besoins.

En variante, le signal d'accès privilégié associé au module initiateur 21 est un signal reçu de l'extérieur du système 10. Il peut s'agir, par exemple, d'un signal statique de configuration ou de tout signal d'excitation extérieur.

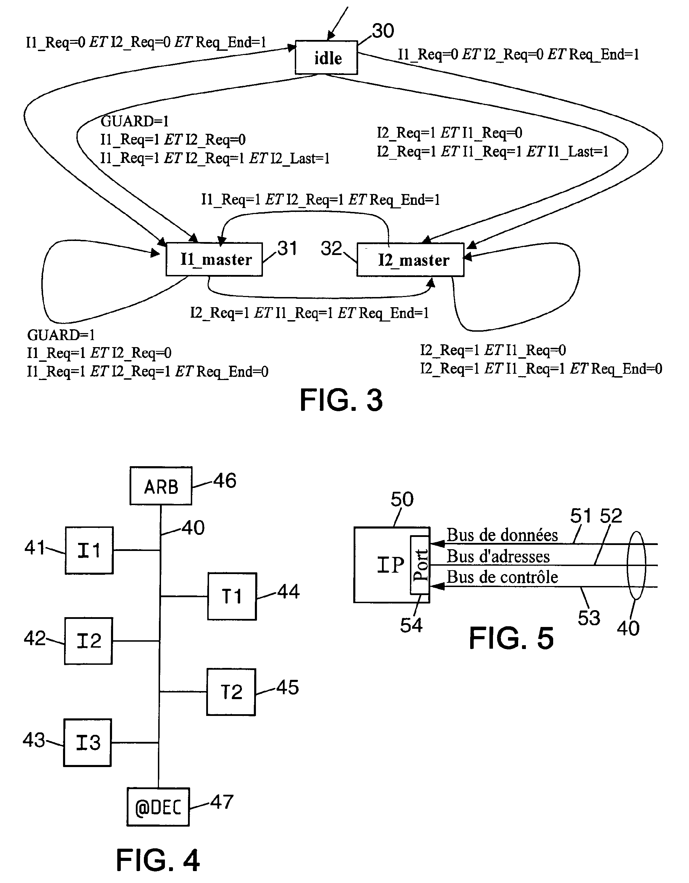

Dans un mode de réalisation, l'unité d'arbitrage est implémentée sous la forme d'une machine d'états, dont un exemple de fonctionnement est illustré par le diagramme d'états de la figure 3.

Dans cet exemple, l'unité d'arbitrage possède trois états distincts. Un état inactif 30 ("idle"), un premier état actif 31 (I1_Master) dans lequel le droit d'accès est accordé au module initiateur 21, et un second état actif 32 (I2_Master) dans lequel le droit d'accès est accordé au module initiateur 22.

Dans un exemple, l'unité d'arbitrage met en oeuvre un mécanisme d'arbitrage standard du type à algorithme d'ancienneté. Dans un mode de mise en oeuvre d'un tel mécanisme d'arbitrage, l'unité d'arbitrage entretient des signaux internes I1_Last et I2_Last. A l'état actif (par exemple l'état logique 1) ces signaux internes I1_Last et I2_Last indiquent que, respectivement, le module initiateur 21 ou le module initiateur 22 est celui qui a obtenu le droit d'accès au module cible en dernier. Par ailleurs, l'unité d'arbitrage 24 reçoit un signal de commande Req_End du module cible 23 qui est actif (par exemple à l'état logique 1) pour indiquer que le traitement par le module cible de la requête en cours est achevé. En effet, l'unité d'arbitrage 24 ne doit pas permettre l'accès au module cible par un autre module initiateur avant que le traitement de la requête en cours soit terminé. Dit autrement, le droit exclusif d'accès accordé à un module initiateur doit être maintenu jusqu'à la fin du traitement de la requête pour laquelle il a été accordé.

On va maintenant détailler toutes les conditions de changement d'état possibles.

Partant de l'état inactif 30, on passe dans l'état actif 31 (I1_master) lorsque le module 21 génère une requête d'accès (I1_Req=1) et que le module 22 n'en émet pas (I2_Req=0). De même, on passe de l'état 30 à l'état 31 lorsque le module 21 et le module 22 émettent tous deux une requête d'accès (I1_Req=1 et I2_Req=1) et que le module 22 est le dernier à avoir eu accès au module cible 23 (I2_Last=1). Enfin, on passe également de l'état 30 à l'état 31 lorsque le signal d'accès privilégié associé au module 21 est activé (GUARD=1).

On repasse de l'état 31 à l'état 30 lorsque ni le module 21 ni le module 22 ne requiert l'accès au module 23 (I1_Req=0 et I2_Req=0) et que, en outre, la requête en cours est terminée (Req_End=1).

Symétriquement, on passe de l'état inactif 30 à l'état actif 32 (I2_master) lorsque le module 22 génère une requête d'accès (I2_Req=1) et que le module 21 n'en émet pas (I1_Req=0). Ceci correspond à une absence de conflit. Par ailleurs, on passe aussi de l'état 30 à l'état 32, dans un cas de requêtes conflictuelles provenant des modules 22 et 21 (I2_Req=1 et I1_Req=1) et que en outre le module 21 est le dernier à avoir eu accès au module cible 23 (I1_Last=1). On notera qu'il n'y a pas pour le module 22 de condition supplémentaire pour le passage de l'état 30 à l'état 32, comparable au cas d'un privilège d'accès accordé au module 21 lorsque son signal d'accès privilégié GUARD associé est à l'état actif.

On repasse de l'état 32 à l'état 30 lorsque ni le module 21 ni le module 22 n'émettent de nouvelles requêtes d'accès (I1_Req=0 et I2_Req=0) et que en outre le traitement de la requête en cours par le module cible 23 est terminé (Req_End=1). A partir de l'état 31, l'unité d'arbitrage 24 passe dans l'état 32 lorsque des requêtes d'accès conflictuelles sont produites à la fois par le module 21 et par le module 22 (I1_Req=1 et I2_Req=1) et que par ailleurs le traitement de la requête en cours par le module cible 23 est terminé (Req_End=1). Ceci résulte de l'application du mécanisme d'arbitrage standard du type à permutation circulaire. On notera, que dans la mesure où il n'y a que deux modules initiateurs dans l'exemple considéré ici, la même condition s'applique lorsque l'unité d'arbitrage 24 met en oeuvre un mécanisme d'arbitrage à ancienneté.

Réciproquement, on passe de l'état 32 à l'état 31 lorsque le module 21 et le module 22 émettent des requêtes d'accès conflictuelles (I1_Req=1 et I2_Req=1) et que par ailleurs le traitement de la requête d'accès en cours par le module cible 23 est terminé (Req_End=1).

On reste dans l'état 31 lorsque l'une des conditions suivantes est satisfaite. Premièrement, lorsque le module 21 émet une requête d'accès (I1_Req=1) et pas le module 22 (I2_Req=0). Deuxièmement, lorsque à la fois le module 21 et le module 22 émettent des requêtes d'accès (I1_Req=1 et I2_Req=1) mais que le traitement de la requête en cours par le module 23 n'est pas terminé (Req_End=0). Et troisièmement, lorsque le signal d'accès privilégié associé au module 21 est à l'état actif (GUARD=1). Dans ce dernier cas en effet, il convient de maintenir le privilège d'accès accordé au module 21.

Enfin, et symétriquement, on reste dans l'état 32 lorsque le module 22 émet une requête d'accès (I2_Req=1) mais pas le module 21 (I1_Req=0), ou bien lorsque à la fois le module 21 et le module 22 émettent des requêtes d'accès conflictuelles (I2_Req=1 et I1_Req=1) mais que le traitement de la requête en cours par le module 23 n'est pas terminé (Req_End=0). On notera là encore qu'il n'y pas de troisième condition comme dans le cas du maintien dans l'étape 31 envisagé ci-dessus, dans la mesure où dans l'exemple considéré ici il n'y a pas de signal d'accès privilégié associé au module 22.

L'invention a été décrite ci-dessus dans un exemple d'application préféré mais non limitatif.

Dans l'exemple ci-dessus, le nombre N de modules fonctionnels du système est égal à 3, le nombre P de modules initiateurs est égal à 2, et le nombre Q de modules cible est égal à l'unité. Néanmoins, il est bien entendu que l'invention s'applique pareillement à des architectures de système plus complexes, dès lors que 2 ≤ P ≤ N et 1 ≤ Q ≤ N. on notera que certains modules fonctionnels peuvent être à la fois de type initiateur et de type cible.

En outre, l'invention trouve aussi à s'appliquer dans les systèmes électroniques numériques comprenant un bus de communication qui est fonctionnellement partagé entre des composants qui lui sont reliés. Dit autrement, ce bus est une ressource commune, partagée entre les modules initiateurs. Il est utilisé par les modules initiateurs pour échanger des données avec les modules cibles, par exemple dans une configuration dite "full-crossbar" (i.e., chaque module initiateur peut accéder à chaque module cible). Une telle architecture convient mieux lorsque le nombre P de modules initiateurs et/ou le nombre Q de modules cibles deviennent importants. L'unité d'arbitrage est alors chargée d'accorder l'accès à cette ressource commune, c'est-à-dire d'attribuer le contrôle du bus, à l'un déterminé des composants initiateurs. En cas de pluralité de composants cibles (Q > 1), un décodeur d'adresses est par ailleurs chargé d'activer le composant cible désigné par le composant initiateur qui contrôle le bus.

Un mécanisme d'arbitrage spécifique peut ainsi être appliqué, prioritairement par rapport au mécanisme d'arbitrage standard qui s'applique à un ensemble (une pluralité) de modules initiateurs qui produisent des requêtes d'accès conflictuelles, seulement aux membres d'un sous-ensemble de modules initiateurs pour chacun desquels l'unité d'arbitrage reçoit un signal d'accès privilégié associé audit module initiateur d'une part et audit mécanisme d'arbitrage spécifique d'autre part. Lorsque ledit sous-ensemble ne comprend qu'un seul membre (cas de l'exemple décrit ci-dessus en regard des figures 2 et 3), le mécanisme d'arbitrage à appliquer est le plus simple possible, puisqu'il consiste à accorder le droit d'accès audit membre.

L'invention n'est pas non plus limitée par le nombre de mécanismes d'arbitrage spécifiques. En effet, des modes de réalisation sont envisageables, dans lesquels il existe une pluralité de mécanismes d'arbitrage spécifiques. Par exemple, ces mécanismes s'appliquent hiérarchiquement, c'est-à-dire prioritairement les uns par rapport aux autres. Ces différents mécanismes d'arbitrage sont chacun applicable seulement aux membres d'un sous-ensemble respectif de l'ensemble formé des composants initiateurs qui produisent des requêtes d'accès conflictuelles. Dans un mode de réalisation, les modules initiateurs de ce sous-ensemble sont ceux pour chacun desquels l'unité d'arbitrage reçoit un signal d'accès privilégié associé audit module initiateur et audit mécanisme d'arbitrage spécifique d'une part, et un signal d'accès privilégié associé audit module initiateur et respectivement à chacun des mécanismes d'arbitrage spécifiques de niveau inférieur d'autre part. L'unité d'arbitrage peut alors être construite pour sélectionner le mécanisme d'arbitrage spécifique à appliquer, qui peut-être le mécanisme d'arbitrage de plus haut niveau dans la hiérarchie des mécanismes d'arbitrage. Cette sélection s'opère par exemple en fonction d'un décodage des signaux d'accès privilégiés, lesquels donnent au mécanisme d'arbitrage spécifique auquel ils sont respectivement associés, un niveau déterminé dans la hiérarchie précitée, c'est-à-dire une priorité déterminée pour être sélectionné.

A titre d'illustration, le schéma de la figure 4 montre l'architecture d'un système à un bus de communication 40. Des modules initiateurs 41, 42 et 43, ainsi que des modules cibles 44 et 45, sont reliés au bus 40. Chacun des modules ci-dessus est relié au bus 40 par l'intermédiaire d'un port de communication de type maître ou de type esclave selon que le module concerné est de type initiateur ou de type cible, respectivement. On rappelle que certains modules peuvent être à la fois de type initiateur et de type cible. Dans ce cas, ils sont reliés au bus 40 via des ports de communication ad hoc respectifs.

Le système comprend aussi un décodeur d'adresses 47 qui est relié au bus 40, et une unité d'arbitrage 46, ou arbitre, qui est également reliée au bus 40 pour assurer la sélection de celui des modules initiateurs 41, 42 ou 43 qui a le contrôle du bus 40 à un instant déterminé.

Le bus de communication 40 comprend des canaux pour la communication de données entre les différents composants du système.

Comme illustré par le schéma de la figure 5, le bus de communication 40 peut ainsi comprendre, dans un exemple, un bus de données 51, un bus d'adresses 52 et un bus de contrôle 53. Dans certains cas, le bus de données 51 comprend un sous-bus de données pour la lecture de données, et un sous-bus de données pour l'écriture de données. Un module fonctionnel 50 du système comprend un port de communication 54, qui peut être de type maître ou de type esclave selon que le module 50 est de type initiateur ou de type cible, respectivement. Le port 54 permet la liaison du module 50 au bus de communication 40.

Le bus de données 51 est utilisé pour transmettre les signaux de données, qui contiennent les informations échangées entre les modules du système.

Le bus d'adresses 52 est utilisé pour transmettre les signaux d'adresses, qui indiquent le module dans lequel les données transmises sur le bus de données doivent être lues ou écrites, ainsi éventuellement que leur emplacement à l'intérieur du module concerné.

Enfin, le bus de contrôle 53 est utilisé pour transmettre les signaux de commande. De tels signaux servent notamment aux modules initiateurs pour demander le contrôle du bus, tels que les signaux I1_Req et les signaux I2_Req de la figure 2. Ils servent aussi aux modules cibles pour indiquer la fin d'une transaction, tel que le signal Req_End de la figure 2, et éventuellement la réussite ou l'échec de la transaction. D'autres signaux de commande servent aussi à définir le sens de la transaction (lecture ou écriture), synchroniser les échanges, etc. Dans un mode de réalisation, des signaux d'accès privilégié associés à des modules initiateurs et/ou à des mécanismes d'arbitrage spécifique selon l'invention, tel que le signal GUARD de la figure 2, peuvent aussi être fournis à l'unité d'arbitrage 46 en tant que signaux de commande respectifs.

L'illustration d'un exemple du fonctionnement de l'unité d'arbitrage selon une telle pluralité de mécanismes, à l'aide d'un diagramme d'étapes du type de celui de la figure 3 devient rapidement très complexe. Néanmoins, la mise en oeuvre de l'unité d'arbitrage sous la forme d'une machine d'états reste bien entendu possible, et même particulièrement appropriée.

## Revendications

1. Système électronique comprenant un nombre déterminé N de modules fonctionnels (21-23;41-45), dont un nombre déterminé P de modules initiateurs (22-22;41-43) et un nombre déterminé Q de modules cibles (23;44-45) où N, P et Q sont des nombres entiers tels que 2 ≤ P ≤ N et 1 ≤ Q ≤ N, et comprenant en outre une unité d'arbitrage (24) pour, en cas d'une pluralité de requêtes conflictuelles d'accès à une ressource commune provenant d'une pluralité de modules initiateurs respectifs, accorder un droit exclusif d'accès à la ressource à l'un déterminé parmi ladite pluralité de modules initiateurs respectifs,
**caractérisé en ce que** l'unité d'arbitrage est construite pour accorder le droit exclusif d'accès soit via un mécanisme d'arbitrage standard appliqué à ladite pluralité de modules initiateurs respectifs, soit prioritairement via un mécanisme d'arbitrage spécifique appliqué seulement aux membres (21) d'un sous-ensemble de ladite pluralité des modules initiateurs, pour chacun desquels l'unité d'arbitrage reçoit un signal d'accès privilégié (GUARD) associé audit module initiateur d'une part et audit mécanisme d'arbitrage spécifique d'autre part.

2. Système électronique selon la revendication 1, dans lequel les modules initiateurs sont reliés aux modules cibles par l'intermédiaire de l'unité d'arbitrage formant également module de commande pour l'échange d'informations entre lesdits modules initiateurs et lesdits modules cibles, la ressource commune étant l'un desdits modules cibles.

3. Système électronique selon la revendication 1, dans lequel les modules fonctionnels et l'unité d'arbitrage sont reliés ensemble par un bus de communication (40), la ressource commune étant ledit bus de communication utilisé pour l'échange d'informations entre lesdits modules initiateurs et lesdits modules cibles.

4. Système électronique selon l'une quelconque des revendications précédentes, dans lequel l'unité d'arbitrage est construite, en outre, pour sélectionner le mécanisme d'arbitrage spécifique en tant que mécanisme d'arbitrage de plus haut niveau parmi une hiérarchie de mécanismes d'arbitrage spécifiques, qui sont chacun applicable seulement aux membres d'un sous-ensemble respectif de la pluralité de modules initiateurs pour chacun desquels l'unité d'arbitrage reçoit un signal d'accès privilégié associé audit module initiateur et audit mécanisme d'arbitrage spécifique et en outre des signaux d'accès privilégié associés audit module initiateur d'une part et respectivement à chacun des mécanismes d'arbitrage spécifiques de niveau inférieur d'autre part.

5. Système électronique selon l'une quelconque des revendications précédentes, dans lequel un signal d'accès privilégié associé à un module initiateur déterminé est généré par lecture de la valeur stockée dans un registre de données associé audit module initiateur.

6. Système électronique selon la revendication 5, dans lequel le registre de données associé à un module initiateur déterminé est accessible en écriture par ledit module initiateur.

7. Système électronique selon la revendication 5 ou 6, dans lequel le registre de données associé est compris dans l'unité d'arbitrage.

8. Système électronique selon l'une quelconque des revendications précédentes, dans lequel un signal d'accès privilégié associé à un module initiateur déterminé est un signal reçu de l'extérieur.

9. Système électronique selon l'une quelconque des revendications précédentes, dans lequel l'unité d'arbitrage est implémentée sous la forme d'une machine d'états.

10. Clé de stockage comprenant au moins une mémoire non volatile et un circuit de commande, **caractérisée en ce que** le circuit de commande est un circuit sur une puce formant système selon l'une quelconque des revendications précédentes.
